# EUROPÄISCHE PATENTANMELDUNG

(11) **EP 1 571 182 A1**
(43) Veröffentlichungstag der Anmeldung: **07.09.2005**
(21) Anmeldenummer: 04005243.3
(22) Anmeldetag: 05.03.2004
(51) Int. Cl.: C09D 5/02, C09D 5/14

(54) **Anstrichmittel auf Wasserbasis enthaltend Karbonsäure oder deren Derivate als Konservierungsmittel**

(71) Anmelder: J.W. Ostendorf GmbH & Co. KG., 48651 Coesfeld (DE)
(72) Erfinder: Ostendorf, Michael, 48653 Coesfeld (DE)
(74) Vertreter: Stenger, Watzke & Ring

(57) **Zusammenfassung**

Die vorliegende Erfindung betrifft ein Anstrichmittel auf Wasserbasis enthaltend zumindest ein Bindemittel, einen Extender, ein Farbmittel, Wasser sowie mindestens ein zusätzliches Additiv. Die neuartigen Zusammensetzungen des erfindungsgemäßen Anstrichmittels, welches unterschiedlichen Eigenschaften für die verschiedensten Einsatzbereiche aufweist, sollen einen größtmöglichen Schutz für Mensch und Umwelt bieten, für Allergiker geeignet sein, und gleichzeitig eine hohe Lagerstabilität zur Vermeidung von Eigenschaftsveränderungen aufweisen sowie wirtschaftlich sein und ohne zusätzliche Sicherungs- beziehungsweise Schutzmaßnahmen, hergestellt und verarbeitet werden, wobei dieses erfindungsgemäß dadurch erreicht wird, daß das Anstrichmittel als Additiv zumindest ein Konservierungsmittel in Form einer aliphatischen und/oder aromatischen Carbonsäure, deren Salze und/oder Ester aufweist.

## Beschreibung

Die vorliegende Erfindung betrifft ein Anstrichmittel auf Wasserbasis enthaltend zumindest ein Bindemittel, einen Extender, ein Farbmittel, Wasser sowie mindestens ein zusätzliches Additiv.

Unter Anstrichmittel werden im allgemeinen flüssige, pasten- oder pulverförmige Beschichtungsstoffe, wie beispielsweise Dispersionsfarben, Putze, Effekte, Grundierungen, Lacke und Lasuren, zur Beschichtung von Oberflächen insbesondere von mineralischen Untergründen, Holz und/oder Metall, zusammengefaßt. Sie enthalten in der Regel mindestens ein wasserverdünnbares Bindemittel, einen Extender beziehungsweise Füllstoff, ein Farbmittel sowie Wasser als Lösungsmittel. Daneben können Additive, wie zum Beispiel Entschäumer, Netzmittel, Verlaufsmittel und/oder Verdicker enthalten sein. Ebenso ist der Einsatz von Aminen oder Laugen zur Einstellung eines alkalischen pH-Wertes sowie die zusätzliche Verwendung von organischen Lösungsmitteln zur Filmbildung oder zur Verbesserung der Applikationseigenschaften üblich.

Auch der Einsatz von Konservierungsmitteln zur Vermeidung mikrobiellen Verderbs sowie zur Erzielung einer ausreichenden Lagerstabilität ist bei wasserverdünnbaren Anstrichmitteln bekannt, da bei deren Herstellung durch das Fabrikationswasser, die Pigmente, Füllstoffe oder Hilfsmittel Pilze und Bakterien eingeschleppt werden können. Vor allem Dispersionsfarben sind durch Pilzbefall gefährdet, wodurch der Einsatz von Konservierungsmitteln (im Gebinde auch als Topf- oder in-can-Konservierung bekannt), insbesondere für einen pH-Bereich bis ca. 11 zwingend erforderlich ist.

Zudem ist die Bekämpfung von gleichzeitigem Pilz- und Bakterienbefall mit einfachen Mitteln sehr schwierig, da im sauren Bereich bevorzugt das Pilzwachstum und im schwach alkalischen Bereich bevorzugt das Bakterienwachstum auftritt. In der Praxis werden daher üblicherweise Wirkstoffkombinationen sogenannter Zusatzstoffe mit gleichzeitiger fungiziden und bakteriziden Wirkung eingesetzt. Besonders Biozide, beziehungsweise Mikrobiozide, wie Algizide, Fungizide, Bakterizide oder Viruzide, mit breitem Wirkungsspektrum werden gegen die zu berücksichtigenden Bakterien, Pilze, etc. vornehmlich als Konservierungsmittel verwendet. Zu ihnen gehören die seit langem bekannten elektrophilen Agentiengruppen, wie zum Beispiel Aldehyde (Formaldehyd, Formaldehyddepot, Glutardialdehyd und Glyoxal etc.), aktivierte Halogenverbindungen (2-Brom-2-nitro-1,3-propandiol, Chloracetamid, chlorierte Phenole und Dibromdicyanobutan etc.) und/oder Isothiazolinone (Chlormethylisothiazolinon, Benzisothiazolinon und Methylisothiazolinon etc.), aber auch quarternäre Ammoniumverbindungen, Alkylzinnverbindungen oder Adamantanverbindungen sowie Kombinationen dieser Stoffe, die gemäß dem Stand der Technik in wasserverdünnbaren Anstrichmitteln als Konservierungsmittel zum Erhalt der erforderlichen Eigenschaften bereits eingesetzt werden.

Als großer Nachteil der vorgenannten Konservierungsmittel muß jedoch die Schädlichkeit dieser Stoffe angesehen werden, die beim Einatmen oder Kontakt mit der Haut zu krankhaften Veränderungen sowie zu Allergien führen können. Produkte, die mit derartigen Konservierungsmitteln versetzt sind, können somit für bestimmte Personengruppen wie zum Beispiel Allergiker ungeeignet sein. So birgt beispielsweise der Einsatz von Chlormethylisothiazolinon das Risiko der Auslösung einer aerogenen Kontaktdermatitis bei Personen, die durch Verwendung kosmetischer Produkte gegenüber Chlormethylisothiazolinon vorsensibilisiert wurden.

Wird anstelle der im Hinblick auf Allergiker besonders kritischen Wirkstoffe Formaldehyd und Chlormethylisothiazolinon eines der Biozide Benz- oder Methylisothiazolinon oder auch eine Kombination dieser beiden, sich synergistisch ergänzende Stoffe verwendet, so wird das allergene Potential zwar gesenkt, es verbleibt jedoch immer noch ein, wenn auch deutlich geringeres allergenes Restpotential.

Zur Vermeidung eines noch so geringen allergenen Restpotentials sind seit einigen Jahren konservierungsmittelfreie Anstrichmittel auf dem Markt erhältlich. Eine Möglichkeit zur Vermeidung von allergenen Konservierungsmitteln besteht in der Einstellung des pH-Wertes von wasserverdünnbaren Anstrichmitteln. Es ist allgemein bekannt, daß in einem pH-Bereich oberhalb von 11 die Lebensfähigkeit von Bakterien, Pilzen und Hefen nicht gegeben ist und somit der zusätzliche Einsatz von Konservierungsmittel entfallen kann. Die Einstellung derartig hoher pH-Werte erfolgt üblicherweise durch Laugen und/oder Amine, wie zum Beispiel Natronlauge, Triethylamin, Dimethylethanolamin, Ammoniak, Aminomethylpropanol etc.

Eine weitere Möglichkeit zur Einstellung der angegebenen pH-Werte oberhalb von 11 besteht in der Verwendung von Wasserglas, da Wasserglas sehr alkalisch ist. Der Einsatz von Wasserglas (zum Beispiel Kali- oder Natronwasserglas, in seltenen Fällen auch Lithiumwasserglas) als Rohstoff für Anstrichmittel erfolgt bekanntermaßen in Silikatfarben, Dispersionssilikatfarben oder Dispersionsfarben. Üblicherweise wird bei den Letzteren eine Kombination einer Polymerdispersion mit Wasserglas verwendet. In derartigen Formulierungen, in denen Wasserglas als Bindemittel oder Additiv eingesetzt wird, stellt sich ein gewünscht hoher pH-Wert ein, bei dem auf den Einsatz von Konservierungsmittel verzichtet werden kann.

Ein deutlicher Nachteil dermaßen alkalischer Anstrichmittel liegt jedoch in der nicht ganz ungefährlichen Verwendung beziehungsweise Verarbeitung, da das Anstrichmittel, insbesondere bei der Rollapplikation, aber auch beim Einsatz eines Pinsels, mit Haut oder Augen in Kontakt kommen und dort Reizungen oder gar Verätzungen hervorrufen kann.

Aufgrund der aufgezeigten Nachteile liegt der vorliegenden Erfindung die **Aufgabe** zugrunde, ein Anstrichmittel mit unterschiedlichen Eigenschaften für die verschiedensten Einsatzbereiche, insbesondere jedoch für den Innenbereich bereitzustellen, welches einen größtmöglichen Schutz für Mensch und Umwelt bietet, für Allergiker geeignet ist, und gleichzeitig eine hohe Lagerstabilität zur Vermeidung von Eigenschaftsveränderungen aufweist, ohne daß der Einsatz aufgrund relevanter, qualitativer Abweichungen im Hinblick auf den flüssigen Verarbeitungszustand wie die trockene Beschichtung eingeschränkt wäre.

Zudem soll ein Anstrichmittel auf Wasserbasis mit einem hautfreundlichen pH-Wert formuliert werden, das ohne zusätzliche Sicherungs- beziehungsweise Schutzmaßnahmen, kostengünstig hergestellt und verarbeitet werden kann.

Die Aufgabe wird erfindungsgemäß durch ein Anstrichmittel der eingangs genannten Art **gelöst**, welches dadurch gekennzeichnet ist, daß das Anstrichmittel als Additiv zumindest ein Konservierungsmittel in Form einer aliphatischen und/oder aromatischen Carbonsäure, deren Salze und/oder Ester aufweist.

Trotz der Vielzahl an bekannten Stoffen zur Konservierung werden für die spezielle Anwendung in Anstrichmitteln im wesentlichen nur die eingangs aufgeführten Konservierungsmittel eingesetzt. Überraschenderweise zeigte sich daher, daß ebenfalls die erfindungsgemäß verwendeten aliphatischen und/oder aromatischen Carbonsäuren, deren Salze und/oder Ester hauptsächlich in Anstrichmitteln auf Wasserbasis erfolgreich zur Konservierung von Anstrichmitteln eingesetzt werden können, ohne daß sich die notwendigen Eigenschaften des Anstrichmittels, wie zum Beispiel die gleichmäßige Ausbildung eines kontinuierlich, luftgetrockneten Films auf einer Substratoberfläche verändern beziehungsweise verschlechtern.

Insbesondere die Verwendung von aliphatischen und/oder aromatischen Carbonsäuren, deren Salze und/oder Ester mit 1 bis 11 Kohlenstoffatomen, bevorzugt 6 bis 10 Kohlenstoffatomen, wie beispielsweise Ameisensäure, Essigsäure, Propionsäure, Milchsäure, Apfelsäure, Ascorbinsäure, Citronensäure, Sorbinsäure, Benzoesäure, Salicylsäure, Dehydracetsäure, deren Salze und/oder Ester, führten in den erfindungsgemäßen Anstrichmitteln zu vergleichbaren Ergebnissen bezüglich der Konservierungseigenschaften beziehungsweise Lagerfähigkeit etc.

Gemäß einer vorteilhaften Zusammensetzung des erfindungsgemäßen Anstrichmittels enthält dieses bevorzugt einen Anteil von 0,1 bis 10 Gew.-%, besonders bevorzugt 0,1 bis 5 Gew.-% zumindest einer aliphatischen und/oder aromatischen Carbonsäure, deren Salze und/oder Ester bezogen auf das Gewicht der Gesamtzusammensetzung des Anstrichmittels.

Als besonders vorteilhaft in bezug auf die Umweltfreundlichkeit, Hautverträglichkeit sowie eine hohe Lagerstabilität des erfindungsgemäßen Anstrichmittels stellte sich der Einsatz einer kleinen Auswahl der vorgenannten Konservierungsmittel heraus. Als aliphatische Carbonsäuren, deren Salze und/oder Ester enthält das erfindungsgemäße Anstrichmittel bevorzugt ungesättigte Fettsäuren und/oder deren Salze, davon besonders bevorzugt Sorbinsäure, Kaliumsorbat, Natriumsorbat und/oder Calziumsorbat. Der Hauptvorteil dieser selektiven Konservierungsmittel, ist deren physiologische Unbedenklichkeit sowie die sehr gute Wirksamkeit gegen Mikroorganismen auch bei höheren pH-Werten.

Als aromatische Carbonsäure, deren Salze und/oder Ester enthält das erfindungsgemäße Anstrichmittel vorzugsweise Benzoesäure, Kaliumbenzoat, Natriumbenzoat, Calziumbenzoat und/oder Parahydroxybenzoate (wobei die letzteren bevorzugt als Ethyl-p-hydroxybenzoat, Natriummethyl-p-hydroxybenzoat, Propyl-p-hydroxybenzoat, Natriumpropyl-p-hydroxybenzoat, Methly-p-hydroxybenzoat und/oder Natriummethyl-p-hydroxybenzoat vorliegen), daß diese sich besonders für schwach saure beziehungsweise leicht gesäuerte Produkte eignen.

Gemäß einer weiteren vorteilhaften Zusammensetzung des erfindungsgemäßen Anstrichmittels wird in diese optional ein pH-Stabilisator eingearbeitet, um einen hautfreundlichen pH-Wert im Bereich zwischen 4 und 7, vorzugsweise im Bereich zwischen 5 und 6 zu erzielen beziehungsweise zu gewährleisten. Besonders geeignete pH-Stabilisatoren sind neben anorganische Säuren, vor allem organische Säuren, wie beispielsweise Oxalsäure, Weinsäure, Citronensäure und andere Fruchtsäuren, Benzoesäure, Salicylsäure, Phthalsäure, Pikrinsäure, Stearinsäure, Essigsäure u. ä. Vorteilhafterweise werden die pH-Stabilisatoren dem erfindungsgemäßen Konservierungsmittel angepaßt und in Anteilen von 0 bis 5 Gew.-%, bevorzugt von 0 bis 2 Gew.-% auf das Gewicht der jeweiligen Zusammensetzung eingesetzt.

Als Bindemittel enthält das erfindungsgemäße Anstrichmittel vorteilhafterweise eine wasserverdünnbare, filmbildende Polymerisatdispersion. Bevorzugt werden in den Zusammensetzungen des erfindungsgemäßen Anstrichmittels wäßrige Dispersionen von Polyacrylat oder Polyvinylacetat eingesetzt, aber auch Hybridsysteme auf Basis Polyacrylat und Alkyd können verwendet werden. Der Anteil ist abhängig vom Produkt und dem Einsatzbereich und liegt zwischen 1 bis 50 Gew.-%, bevorzugt zwischen 2 bis 30 Gew.-%, jeweils bezogen auf das Gewicht der Zusammensetzung des Anstrichmittels. Ferner enthalten die Zusammensetzungen bevorzugt 10 bis 95 Gew.-%, besonders bevorzugt 20 bis 60 Gew.-% Wasser, jeweils bezogen auf das Gewicht der Zusammensetzungen.

Die Zusammensetzungen des erfindungsgemäßen Anstrichmittels können pigmentiert oder in Form eines Klarlackes in glänzender oder mattierter Form hergestellt und verwendet werden.

Der Einsatz geeigneter Farbmittel, wie beispielsweise Pigmente, die üblicherweise in Beschichtungsmitteln eingesetzt werden (wie zum Beispiel Titandioxid, Ruß, Eisenoxidpigmente, Metalloxid-Glimmer-Pigmente, Aluminiumpigmente u. ä.), erfolgt hierbei mit einem Anteil von bis zu 30 Gew.-%, bezogen auf das Gewicht der Zusammensetzung.

Desweiteren enthalten die Zusammensetzungen des erfindungsgemäßen Anstrichmittels zumindest einen Extender beziehungsweise Füllstoff (beispielsweise Quarzmehl, Kreide, Calciumcarbonat, Talkum, Bariumsulfat, Silikate, Siliciumdioxid u. ä.) in den üblichen Mengen, bevorzugt bis zu 60 Gew.-%, bezogen auf das Gewicht der Zusammensetzung.

Optional können die Zusammensetzungen des erfindungsgemäßen Anstrichmittels 0 bis 20 Gew.-%, bevorzugt 0 bis 10 Gew.-%, besonders bevorzugt 0 bis 5 Gew.-% zumindest eines wasserlöslichen, polaren organischen Lösungsmittel enthalten, wobei die Prozentangaben auf das Gewicht der jeweiligen Zusammensetzung bezogen sind. Beispiele für geeignete wasserlösliche, polare organische Lösungsmittel sind niedrige, aliphatische, einwertige Alkohole, wie zum Beispiel Methanol, Ethanol, n-Propanol, Isopropanol, n-Butanol, Pentanole, Hexanole, oder Glykolether, Ester, Ketone und gewisse modifizierte Alkohole, wie zum Beispiel Monoalkylether von Ethylen- oder Propylenglykol, beispielsweise Propylenglykolmethylether und Propylenglykol-methylethylether, Diacetonalkohol und Esteralkohole. Diese genannten wasserlöslichen, polaren organischen Lösungsmittel unterstützen die Filmbildung. Ferner tragen sie zur Verbesserung der Verarbeitungseigenschaften bei der Streich- und Rollapplikation bei.

Daneben können die Zusammensetzungen der erfindungsgemäßen Anstrichmittel optional noch weitere handelsübliche Zusätze in gewohnten Mengen enthalten. Hierzu gehören beispielsweise 0 bis 15 Gew.-%, bevorzugt 0 bis 5 Gew.-%, zumindest eines schwerwasserlöslichen organischen Lösungsmittels, 0 bis 5 Gew.-%, bevorzugt 0 bis 2 Gew.-%, zumindest eines oberflächenaktiven Mittels, sowie 0 bis 2 Gew.-%, bevorzugt 0 bis 1 Gew.-% zumindest eines Entschäumers, wobei alle Prozentangaben jeweils auf das Gewicht der Zusammensetzung des erfindungsgemäßen Anstrichmittels bezogen sind.

Als schwerlösliche, organische Lösungsmittel eignen sich besonders aliphatische Kohlenwasserstoffe, wie zum Beispiel Benzin oder Testbenzin, Dipenten, höhere aliphatische Alkohole, wie zum Beispiel Ethylhexanol, Isodecanol sowie Isononanol, Propylenglykol, Dipropylenglykol, Triethylenglykol, Tripropylenglykol u. ä.

Die Anwesenheit eines Pigments erfordert üblicherweise die Zugabe eines oder mehrerer oberflächenaktiver Mittel, um eine Suspendierung des Pigments im flüssigen Träger sicherzustellen. Das oder die oberflächenaktiven Mittel (beispielsweise Salze einer polymeren Carboxylsäure, Salze eines Acrylpolymers, modifizierte Alkylarylpolyether u. ä.) werden üblicherweise in einer Menge von 0 bis 5 Gew.-%, bevorzugt 0 bis 2 Gew.-%, jeweils bezogen auf das Gewicht der Zusammensetzung des erfindungsgemäßen Anstrichmittels eingesetzt.

Zur Veränderung der Oberflächenspannung des Anstrichmittels eignet sich u. a. die Verwendung zumindest eines Entschäumers (beispielsweise einem nichtionogenen Netzmittels), der ein leichtes Austreten von ungelösten Gasen nach dem Applizieren des Anstrichmittels auf der Substratoberfläche ermöglicht und dem Detergenseffekt der in der Zusammensetzung vorhandenen oberflächenaktiven Mittel entgegenwirkt.

Schließlich können die erfindungsgemäßen Anstrichmittel noch weitere Hilfs- und Zusatzstoffe, wie beispielsweise Verdicker beziehungsweise Thixotropiermittel, (wie zum Beispiel Cellulose, Polyurethan- oder auch Polyacrylverdicker, organisch modifizierte Bentonite), Gleitmittel, Verlaufsmittel u ä., in gebräuchlichen Mengen, bevorzugt O bis 10 Gew.-%, bezogen auf das Gewicht der Zusammensetzung des erfindungsgemäßen Anstrichmittels aufweisen.

Zur näheren Erläuterung der Erfindung wird im Folgenden eine allgemeine Zusammensetzung sowie weitere Ausführungsbeispiele des erfindungsgemäßen Anstrichmittels dargestellt, worauf sich die Erfindung jedoch nicht beschränken läßt.

### Zusammensetzung des erfindungsgemäßen Anstrichmittels:

Das erfindungsgemäße Anstrichmittel umfasst im wesentlichen

| | |
|---|---|
| 10 - 95 Gew.-% | Wasser, |
| 1 - 60 Gew.-% | eines Extenders, |
| 1 - 50 Gew.-% | eines Bindemittels, |
| 1 - 30 Gew.-% | eines Farbmittels, |
| 0,1 - 10 Gew.-% | einer aliphatischen und/oder aromatischen Carbonsäure, deren Salze und/oder Ester, |

Optional können dem Anstrichmittel weitere Zusatzstoffe zugegeben werden:

| | |
|---|---|
| 0 - 20 Gew.-% | eines wasserlöslichen, polaren organischen Lösungsmittels, |
| 0 - 15 Gew.-% | eines schwerwasserlöslichen, organischen Lösemittels, |
| 0 - 5 Gew.-% | eines oberflächenaktiven Mittels, |
| 0 - 5 Gew.-% | eines Stabilisators, und |
| 0 - 2 Gew.-% | eines Entschäumers. |

Die Zusammensetzungen der erfindungsgemäßen Anstrichmittel sind in der Formulierung auf den jeweiligen Einsatzbereich abgestimmt. Sie eignen sich genau so gut zur Herstellung einer Dispersionsfarbe oder eines Putzes für den Innenbereich sowie zur Herstellung von Füllern, Grundierungen (beispielsweise für die Holz- und/oder Metallbeschichtung), glänzenden oder glanzreduzierten Decklacken, Holz- und Effektlasuren und/oder Effekten (wie beispielsweise Metalleffekte), wobei die Beständigkeiten entsprechend den Anforderungen auf dem gleichen Niveau sind wie die marktüblichen Standardprodukte.

Die Zusammensetzungen der erfindungsgemäßen Anstrichmittel weisen dabei eine sehr gute Applizierbarkeit mit dem Pinsel oder der Rolle auf. Sie zeigen eine gute Standfestigkeit, eine gute Kantenabdeckung des Untergrundes, eine gleichmäßige Beschichtung und einen guten Verlauf. Der pigmentierte oder unpigmentierte Film trocknet bei einer Umgebungstemperatur von mindestens 5° C.

### Ausführungsbeispiele:

Die Erfindung wird nun anhand von Ausführungsbeispielen näher erläutert. Alle Angaben über Teile und Prozente sind dabei Gewichtsangaben, falls nicht ausdrücklich etwas anderes festgestellt wird.

### Beispiel 1:

### Rezeptur einer weißen Dispersionsfarbe für den Innenbereich

Das Fertigungsverfahren ist dem Fachmann bekannt, so daß auf die jeweiligen Bedingungen hier nicht näher eingegangen wird.

| | |
|---|---|
| 0,15 Teile | Celluloseether |
| 27,00 Teile | Wasser |
| 20,30 Teile | eines handelsüblichen Entschäumers |
| 0,30 Teile | eines handelsüblichen Polyurethanverdickers |
| 30,35 Teile | Calciumcarbonat |
| 10,50 Teile | Titandioxid |
| 12,80 Teile | Talkum |
| 0,50 Teile | eines handelsüblichen Netzmittels |
| 16,30 Teile | einer Polyvinylacetatdispersion (55 % Festkörper) |
| 1,80 Teile | Calciumsorbat |
| 100,00 Teile | |

Mit einer organischen Säure wurde ein pH-Wert zwischen 5 und 6 eingestellt und die so erhaltene Zusammensetzung des Anstrichmittels abgefüllt. Sie weist eine sehr gute Lagerstabilität auf. Sowohl nach einer Lagerung von 3 Monaten bei 50°C als auch nach einer Lagerung von 12 Monaten bei Umgebungstemperaturen traten keine Veränderungen der Dispersionsfarbe auf.

Die Dispersionsfarbe zeigte ferner eine sehr gute Applizierbarkeit mit der Rolle oder dem Pinsel sowie eine gute Standfestigkeit, eine gute Abdeckung des Untergrundes, eine gleichmäßige Beschichtung und einen guten Verlauf auf.

Zur Prüfung der technischen Eigenschaften wurde die Dispersionsfarbe entsprechend der DIN EN 13300 abgeprüft. Sie zeigte im Vergleich zum Standardprodukt keine Abweichungen, weder im Kontrastverhältnis, in der Helligkeit noch im Naßabrieb.

### Beispiel 2:

### Rezeptur einer hellen, wasserverdünnbaren Grundierung

Das Fertigungsverfahren ist dem Fachmann bekannt, so daß auf die jeweiligen Bedingungen hier nicht näher eingegangen wird.

| | |
|---|---|
| 17,00 Teile | Wasser |
| 0,50 Teile | eines handelsüblichen Netzmittels |
| 38,00 Teile | einer Polyacrylatdispersion (50 % Festkörper) |
| 18,00 Teile | Titandioxid |
| 15,00 Teile | Talkum |
| 8,20 Teile | Schwerspat |
| 0,50 Teile | eines Polyurethanverdickers |
| 0,30 Teile | eines handelsüblichen Entschäumers |
| 2,50 Teile | Propyl-p-hydroxybenzoat |
| 100,00 Teile | |

Mit einer organischen Säure wurde ein pH- Wert zwischen 5 und 6 eingestellt und die so erhaltene Grundierung abgefüllt. Sie weist eine sehr gute Lagerstabilität auf. Sowohl nach einer Lagerung von 3 Monaten bei 50° C als auch nach einer Lagerung von 12 Monaten bei Umgebungstemperatur traten keine Veränderungen des Produktes auf.

Die Grundierung zeigte ferner eine sehr gute Applizierbarkeit mit dem Pinsel. Es resultierte eine gute Standfestigkeit, eine gute Kantenabdeckung, eine gleichmäßige Beschichtung und ein guter Haftverbund zum nachfolgendem Decklack.

Die Ergebnisse der Prüfungen auf Haftung, Elastizität und Trocknung zeigten eine sehr gute Vergleichbarkeit mit dem Standardprodukt.

### Beispiel 3:

### Rezeptur eines wasserverdünnbaren, weiß glänzenden Decklackes

Das Fertigungsverfahren ist dem Fachmann bekannt, so daß auf die jeweiligen Bedingungen hier nicht näher eingegangen wird.

| | |
|---|---|
| 6,60 Teile | Wasser |
| 3,90 Teile | einer handelsüblichen Polyacrylverdickerlösung |
| 0,90 Teile | eines handelsüblichen Netzmittels |
| 0,10 Teile | eines handelsüblichen Entschäumers |
| 25,00 Teile | Titandioxid |
| 60,00 Teile | einer Polyacrylatdispersion (50 % Festkörper) |
| 2,00 Teile | Essigsäure |
| 1,50 Teile | Calciumsorbat |
| 100,00 Teile | |

Es wurde ein pH-Wert zwischen 5 und 6 gemessen und der so erhaltene Glanzlack abgefüllt. Er weist eine sehr gute Lagerstabilität auf. Sowohl nach einer Lagerung von 3 Monaten bei 50° C als auch nach einer Lagerung von 12 Monaten bei Umgebungstemperatur traten keine Veränderungen des Produktes auf.

Der Lack war mit dem Pinsel und der Rolle sehr gut applizierbar. Er zeigte eine gute Standfestigkeit, eine gute Kantenabdeckung, eine gleichmäßige Beschichtung, hohen Glanz und machte optisch einen sehr guten Eindruck.

Die Resultate der Prüfungen auf Haftung, Elastizität, Trocknung und Wetterbeständigkeit ergaben sehr gute Vergleichbarkeit mit dem Standardprodukt.

### Beispiel 4:

### Rezeptur einer wasserverdünnbaren Lasur - Farbton Kastanie

Das Fertigungsverfahren ist dem Fachmann bekannt, so daß auf die jeweiligen Bedingungen hier nicht näher eingegangen wird.

| | |
|---|---|
| 65,10 Teile | einer Polyacrylatdispersion (50 % Festkörper) |
| 21,90 Teile | Wasser |
| 0,40 Teile | eines Polyacrylatverdickers |
| 3,20 Teile | Propylenglykol |
| 0,20 Teile | eines handelsüblichen Entschäumers |
| 0,10 Teile | einer handelsüblichen Schwarz-Paste |
| 1,70 Teile | einer handelsüblichen, transparenten Eisenoxidrot-Paste |
| 3,10 Teile | einer handelsüblichen, transparenten Eisenoxidgelb-Paste |
| 1,80 Teile | Essigsäure |
| 2,50 Teile | Caliumbenzoat |
| 100,00 Teile | |

Der pH-Wert lag zwischen 5 und 6. Die so erhaltene Lasur im Farbton Kastanie wurde dann abgefüllt. Sie weist eine sehr gute Lagerstabilität auf. Sowohl nach einer Lagerung von 3 Monaten bei 50° C als auch nach einer Lagerung von 12 Monaten bei Umgebungstemperatur traten keine Veränderungen des Produktes auf.

Die Lasur wurde mittels Pinsel mit sehr gutem Ergebnis auf einem Holzuntergrund appliziert.

Sie zeigte eine gute Penetration, gute Standfestigkeit, eine gleichmäßige, transparente Beschichtung und machte optisch einen sehr guten Eindruck.

Die Resultate der Prüfungen auf Haftung, Trocknung und UV-Beständigkeit ergaben sehr gute Vergleichbarkeit mit dem Standardprodukt.

## Patentansprüche

1. Anstrichmittel auf Wasserbasis zumindest enthaltend ein Bindemittel, einen Extender, ein Farbmittel, Wasser sowie mindestens ein zusätzliches Additiv,
**dadurch gekennzeichnet,**
**daß** das Anstrichmittel als Additiv zumindest ein Konservierungsmittel in Form einer aliphatischen und/oder aromatischen Carbonsäure, deren Salze und/oder Ester aufweist.

2. Anstrichmittel nach Anspruch 1, **dadurch gekennzeichnet, daß** dieses als aliphatische Carbonsäure, deren Salze und/oder Ester vorzugsweise Sorbinsäure, Kaliumsorbat, Natriumsorbat und/oder Calziumsorbat enthält.

3. Anstrichmittel nach Anspruch 1 oder 2, **dadurch gekennzeichnet, daß** dieses als aromatische Carbonsäure, deren Salze und/oder Ester vorzugsweise Benzoesäure, Kaliumbenzoat, Natriumbenzoat, Calziumbenzoat und/oder Parahydroxybenzoate enthält.

4. Anstrichmittel nach Anspruch 3, **dadurch gekennzeichnet, daß** dieses als Parahydroxybenzoat Ethyl-p-hydroxybenzoat, Natriummethyl-p-hydroxybenzoat, Propyl-p-hydroxybenzoat, Natriumpropyl-p-hydroxybenzoat, Methyl-p-hydroxybenzoat und/oder Natriummethyl-p-hydroxybenzoat enthält.

5. Anstrichmittel nach einem der Ansprüche 1 bis 4, **dadurch gekennzeichnet, daß** es einen pH-Wert im Bereich von 4 bis 7, vorzugsweise im Bereich von 5 bis 6 aufweist.

6. Anstrichmittel nach einem der Ansprüche 1 bis 5, **dadurch gekennzeichnet, daß** dieses als Bindemittel eine wasserverdünnbare, filmbildende Polymerisatdispersion enthält.

7. Anstrichmittel nach einem der Ansprüche 1 bis 6, **dadurch gekennzeichnet, daß** dieses als Polymerisatdispersion vorzugsweise eine Polyacrylatdispersion enthält.

8. Anstrichmittel nach einem der Ansprüche 1 bis 7, enthaltend zumindest
| | |
|---|---|
| 10 - 95 Gew.-% | Wasser, |
| 1 - 60 Gew.-% | eines Extenders, |
| 1 - 50 Gew.-% | eines Bindemittels, |
| 1 - 30 Gew.-% | eines Farbmittels, |
| 0,1 - 10 Gew.-% | einer aliphatischen und/oder aromatischen Carbonsäure, deren Salze und/oder Ester, |
| 0 - 20 Gew.-% | eines wasserlöslichen, polaren organischen Lösungsmittels, |
| 0 - 15 Gew.-% | eines schwerwasserlöslichen, organischen Lösemittels, |
| 0 - 5 Gew.-% | eines oberflächenaktiven Mittels, |
| 0 - 5 Gew.-% | eines Stabilisators und |
| 0 - 2 Gew.-% | eines Entschäumers. |

## Geänderte Patentansprüche

### Geänderte Patentansprüche gemäss Regel 86(2) EPÜ.

**1.** Anstrichmittel auf Wasserbasis zumindest enthaltend ein Bindemittel, einen Extender, ein Farbmittel, Wasser sowie mindestens ein zusätzliches Additiv,
**dadurch gekennzeichnet, daß**
das Anstrichmittel als Additiv zumindest ein Konservierungsmittel in Form einer aliphatischen und/oder aromatischen Carbonsäure deren Salze und/oder Ester aufweist und das als Bindemittel eine wasserverdünnbare, filmbildende Polymerisatdispersion auf Basis einer Polyacrylatdispersion dient.

**2.** Anstrichmittel nach Anspruch 1, **dadurch gekennzeichnet, daß** dieses als aliphatische Carbonsäure, deren Salze und/oder Ester Sorbinsäure, Kaliumsorbat, Natriumsorbat und/oder Calciumsorbat enthält.

**3.** Anstrichmittel nach Anspruch 1 oder 2, **dadurch gekennzeichnet, daß** dieses als aromatische Carbonsäure, deren Salze und/oder Ester Benzoesäure, Kaliumbenzoat, Natriumbenzoat, Calciumbenzoat und/oder Parahydroxybenzoate enthält.

**4.** Anstrichmittel nach Anspruch 3, **dadurch gekennzeichnet, daß** dieses als Parahydroxybenzoat Ethyl-p-hydroxybenzoat, Natriummethyl-p-hydroxybenzoat, Propyl-p-hydroxybenzoat, Natriumpropyl-p-hydroxybenzoat, Methyl-p-hydroxybenzoat und/oder Natriummethyl-p-hydroxybenzoat enthält.

**5.** Anstrichmittel nach einem der Ansprüche 1 bis 4, **dadurch gekennzeichnet, daß** es einen pH-Wert im Bereich von 4 bis 5 aufweist.

**6.** Anstrichmittel nach einem der Ansprüche 1 bis 4, **dadurch gekennzeichnet, daß** es einen pH-Wert im Bereich von 5 bis 6 aufweist.

**7.** Anstrichmittel nach einem der Ansprüche 1 bis 6, enthaltend zumindest
| | |
|---|---|
| 10 - 95 Gew.-% | Wasser, |
| 1 - 60 Gew.-% | eines Extenders, |
| 1 - 50 Gew.-% | eines Bindemittels, |
| 1 - 30 Gew.-% | eines Farbmittels, |
| 0,1 - 10 Gew.-% | einer aliphatischen und/oder aromatischen Carbonsäure, deren Salze und/oder Ester, |
| 0 - 20 Gew.-% | eines wasserlöslichen, polaren organischen Lösungsmittels, |
| 0 - 15 Gew.-% | eines schwerwasserlöslichen, organischen Lösemittels, |
| 0 - 5 Gew.-% | eines oberflächenaktiven Mittels, |
| 0 - 5 Gew.-% | eines Stabilisators und |
| 0 - 2 Gew.-% | eines Entschäumers. |
